# EUROPÄISCHE PATENTANMELDUNG

(11) **EP 2 436 485 A2**
(43) Veröffentlichungstag der Anmeldung: **04.04.2012**
(21) Anmeldenummer: 11178436.9
(22) Anmeldetag: 23.08.2011
(51) Int. Cl.: B24B 23/04, B24B 47/16, B23Q 5/027

(54) **Handwerkzeug**

(30) Priorität: 17.09.2010 DE 102010046629
(71) Anmelder: C. & E. Fein GmbH, 73529 Schwäbisch Gmünd-Bargau (DE)
(72) Erfinder: Weber, Heinrich, 73527 Schwäbisch Gmünd (DE); Blickle, Jürgen, 73035 Göppingen (DE)
(74) Vertreter: Witte, Weller & Partner

(57) **Zusammenfassung**

Die Erfindung betrifft ein Handwerkzeug mit einem Gehäuse (12) mit einem Getriebekopf (14), mit einer durch einen Motor (30) rotatorisch antreibbaren Motorwelle (36), die über einen Exzenterkoppeltrieb (44) mit einer Werkzeugspindel (16) zu deren Antrieb koppelbar ist, wobei die Werkzeugspindel (16) um ihre Längsachse (22) drehoszillatorisch antreibbar und zur Aufnahme eines Werkzeugs (20) ausgebildet ist, wobei eine Bewegungsumkehreinrichtung (64, 64a, 64b) vorgesehen ist, die dazu ausgebildet ist, eine vom Exzenterkoppeltrieb (44) erzeugte oszillierende Antriebsbewegung in eine oszillierende Abtriebsbewegung zu überführen, die einen zu dieser entgegengerichteten Drehsinn aufweist. Vorzugsweise ist die Bewegungsumkehreinrichtung (64, 64a, 64b) als Planetengetriebe ausgebildet (Fig. 2).

## Beschreibung

Die Erfindung betrifft ein Handwerkzeug mit einem Gehäuse mit einem Getriebekopf, mit einer durch einen Motor rotatorisch antreibbaren Motorwelle, die über einen Exzenterkoppeltrieb mit einer Werkzeugspindel zu deren Antrieb koppelbar ist, wobei die Werkzeugspindel um ihre Längsachse drehoszillatorisch antreibbar und zur Aufnahme eines Werkzeugs ausgebildet ist.

Ein derartiges Handwerkzeug ist aus der WO 2008/128804 A1 bekannt. Es handelt sich dabei um eine Werkzeugmaschine mit einer Antriebseinheit zum Antrieb einer Antriebswelle und einer Abtriebswelle, auf der ein Werkzeug aufgenommen ist. Die Drehbewegung der Antriebswelle kann über eine Exzenterkoppeleinrichtung auf die Antriebswelle übertragen werden.

Derartige Handwerkzeuge können etwa zum Schneiden oder Schleifen von Werkstücken genutzt werden, wobei die Oszillationsbewegung des Werkzeuges grundsätzlich eine präzise Führung bei hoher Schnitt- bzw. Abtragsleistung ermöglichen kann.

Es hat sich gezeigt, dass der Gebrauch derartiger Handwerkzeuge mit Vibrationsbelastungen einhergehen kann, die von einem Bediener bei längerem Gebrauch als störend empfunden werden können.

In diesem Zusammenhang schlägt die WO 2008/128804 A1 vor, zum Schwingungsausgleich eine Massenausgleichseinrichtung vorzusehen, die eine der von der Exzenterkoppeleinrichtung erzeugte Exzenterkoppelbewegung entgegengerichtete Ausgleichsbewegung ausführt.

Es ist damit grundsätzlich möglich, Vibrationsbelastungen zu reduzieren, jedoch erfordert die Massenausgleichseinrichtung einen erhöhten Bauaufwand und ein erhebliches Mehrgewicht. Es hat sich gezeigt, dass die oszillierenden Komponenten der Exzenterkoppeleinrichtung, die damit gekoppelte Abtriebswelle sowie das an dieser festgelegte Oszillationswerkzeug eine hohe Masse bzw. ein beträchtliches Trägheitsmoment aufweisen. Diese müssen für einen spürbaren Schwingungsausgleich entsprechend Berücksichtigung bei der Auslegung der Massenausgleichseinrichtung finden und bedingen folglich ein erhöhtes Gesamtgewicht.

Vor diesem Hintergrund liegt der Erfindung die Aufgabe zugrunde, ein Handwerkzeug zum oszillierenden Antrieb eines Werkzeugs anzugeben, das ergonomisch und ermüdungsarm bei hoher Leistungsfähigkeit betrieben werden kann und dabei einen möglichst einfachen Aufbau aufweist.

Diese Aufgabe wird bei einem Handwerkzeug gemäß der eingangs genannten Art dadurch gelöst, dass eine Bewegungsumkehreinrichtung vorgesehen ist, die dazu ausgebildet ist, eine vom Exzenterkoppeltrieb erzeugte oszillierende Antriebsbewegung in eine oszillierende Abtriebsbewegung zu überführen, die einen zu dieser entgegengerichteten Drehsinn aufweist.

Die Aufgabe der Erfindung wird auf diese Weise gelöst.

Erfindungsgemäß wird nämlich die Antriebsbewegung selbst genutzt, um einen Schwingungsausgleich herbeizuführen, indem ein Teil der an der Antriebsübertragung beteiligten Komponenten in eine Bewegung gebracht wird, die der Bewegung eines anderen Teils der beteiligten Komponenten entgegengerichtet ist. Damit kann sozusagen eine zumindest teilweise Auslöschung der von einem Bediener wahrgenommenen Schwingungen bewirkt werden, ohne dass aufwändige massenbehaftete Zusatzeinrichtungen erforderlich sind, die "blind" mitlaufen.

Mit anderen Worten wird, verglichen mit aus dem Stand der Technik bekannten Handwerkzeugen, in dem Verbund Werkzeug-Werkzeugspindel-Exzenterkoppeltrieb eine Schnittstelle eingebracht, an der sich der Drehsinn der anliegenden Drehoszillation umkehrt.

Gemäß einer Weiterbildung der Erfindung ist die Bewegungsumkehreinrichtung ferner dazu ausgebildet, die Antriebsbewegung zu übersetzen.

Auf diese Weise kann insbesondere der sich bei einer Oszillation ergebende Schwenkwinkel des Werkzeugs beeinflusst werden. Es versteht sich dabei, dass die entgegengerichteten oszillierenden Bewegungen weiterhin die gleiche Oszillationsfrequenz aufweisen.

Die oszillierende Antriebsbewegung kann etwa "ins Schnelle" übersetzt werden, so dass sich beim Werkzeug ein großer Verschwenkwinkel ergibt, bei dem insbesondere weiche Werkstücke mit hoher Abtragsleistung bzw. Schnittleistung bearbeitet werden können.

Daneben kann die Übersetzung der Antriebsbewegung "ins Langsame" einen geringen Verschwenkwinkel des Werkzeugs bewirken. Somit kann die Fähigkeit zur Bearbeitung harter Werkstücke steigen. Bei einem Oszillationswerkzeug mit einem besonders geringen Verschwenkwinkel verspürt ein Benutzer nur geringe Reaktionsmomente, die Eignung des Handwerkzeugs zum Erzeugen besonders präziser Schnitte oder Schlitze wird weiter verbessert.

Ferner kann eine der oszillierenden Antriebsbewegung und der oszillierenden Abtriebsbewegung zwischengeschaltete Übersetzung genutzt werden, um bei gegebenem Trägheitsmoment J der beteiligten Komponenten über die sich ergebende Winkelbeschleunigung α das zum Verschwenken des Werkzeugs ohne Last erforderliche Drehmoment M zu beeinflussen (*M* = *J · α*).

Durch diese Maßnahme kann beispielsweise das mit der oszillierenden Antriebsbewegung verknüpfte Drehmoment Mₐₙ mit dem mit der oszillierenden Abtriebsbewegung verknüpften Drehmoment M_{ab} in Übereinstimmung gebracht oder diesem zumindest angenähert werden. Befinden sich also Mₐₙ und M_{ab} nahezu in Übereinstimmung, entsprechen sich also die jeweiligen Produkte aus Trägheitsmoment und Winkelbeschleunigung, so kann in Anbetracht des entgegengerichteten Drehsinns eine besonders effektive Auslöschung der um die Längsachse der Werkzeugspindel auftretenden Oszillationsschwingungen erfolgen.

Gemäß einer weiteren Ausgestaltung der Erfindung weist der Exzenterkoppeltrieb einen Mitnehmer auf, der oszillierend angetrieben ist und mit der Bewegungsumkehreinrichtung zu deren Antrieb koppelbar ist.

Auf diese Weise kann sich ein einfacher Aufbau des Exzenterkoppeltriebs ergeben. Der Mitnehmer kann zur Erzeugung der oszillierenden Antriebsbewegung direkt oder indirekt mit der Motorwelle gekoppelt sein.

In vorteilhafter Weiterbildung der Erfindung ist der Mitnehmer als schwenkbare Mitnehmergabel ausgebildet, wobei der Exzenterkoppeltrieb einen umlaufenden Ezenterabschnitt aufweist, der mit einer gewölbten Fläche der Mitnehmergabel zusammenwirkt.

Der umlaufende Exzenterabschnitt kann dabei direkt bei der Motorwelle oder bei einer von dieser angetriebenen Zwischenwelle angeordnet sein. Der umlaufende Exzenterabschnitt kann etwa über ein Pendellager oder ein balliges Lager mit der Mitnehmergabel zusammenwirken.

Diese Maßnahme hat den Vorteil, dass der exzentrische Umlauf des Exzenterabschnitts besonders einfach bei geringem Bauaufwand in eine Hin- und Herbewegung des Mitnehmers in einer Ebene überführt werden kann.

Gemäß einem weiteren Aspekt der Erfindung ist die Bewegungsumkehreinrichtung als Planetengetriebe ausgebildet und vorzugsweise koaxial zur Längsachse angeordnet.

Auf diese Weise kann die Bewegungsumkehreinrichtung raumsparend und gewichtssparend direkt an der Werkzeugspindel angeordnet werden. Damit kann die Bewegungsumkehreinrichtung vollständig oder nahezu vollständig rotationssymmetrisch oder symmetrisch zu einer Hauptebene des Handwerkzeugs ausgebildet sein.

Somit kann das auf die Längsachse der Werkzeugspindel bezogene Trägheitsmoment der Bewegungsumkehreinrichtung besonders niedrig ausfallen. Insgesamt kann sich so etwa ein patronenartiger kompakter Aufbau ergeben, so dass die spürbare Vibrationsreduzierung bei gleichem oder nahezu gleichem Bauraumbedarf des Handwerkzeugs, insbesondere des Getriebekopfes, erfolgen kann.

Gemäß einer weiteren Ausgestaltung der Erfindung weist die Bewegungsumkehreinrichtung ein Hohlrad auf, das drehfest mit dem Mitnehmer gekoppelt ist.

Insbesondere wenn der Mitnehmer als Mitnehmergabel ausgeführt ist, kann das Hohlrad mit diesem gekoppelt oder aber mit diesem einstückig ausgeführt sein. Eine derartige Bauteilintegration kann dazu beitragen, den Teileaufwand zu minimieren und die Herstellung oder die Montage des Handwerkzeugs zu vereinfachen.

Gemäß einem weiteren Aspekt der Erfindung weist die Bewegungsumkehreinrichtung ein Sonnenrad auf, das drehfest mit der Werkzeugspindel gekoppelt ist, insbesondere mit dieser einstückig ausgeführt ist.

Somit kann die Werkzeugspindel mit dem Sonnenrad etwa aus einem Vollwellenmaterial gebildet sein und eine hohe Robustheit aufweisen.

Mit einer Ausgestaltung, bei der sowohl ein mit dem Mitnehmer gekoppeltes Hohlrad als auch ein Sonnenrad, das an der Werkzeugspindel angeordnet ist, vorgesehen sind, kann sich bei Berücksichtigung der übrigen Komponenten des Planetengetriebes, zumindest eines Planetenrades und eines Planetenträgers, eine Konfiguration ergeben, die eine Übersetzung ins Schnelle ermöglicht. Mit anderen Worten wird dabei ein bestimmter Antriebswinkel, der beim Mitnehmer erzeugt wird, in einen größeren Abtriebswinkel überführt, der bei der Werkzeugspindel anliegt.

In alternativer Ausgestaltung der Erfindung weist die Bewegungsumkehreinrichtung ein Sonnenrad auf, das drehfest mit dem Mitnehmer gekoppelt ist.

Auf diese Weise kann die oszillierende Antriebsbewegung über das Sonnenrad in das Planetengetriebe der Bewegungsumkehreinrichtung eingeleitet werden, so dass grundsätzlich andere Übersetzungen bewirkt werden können. Das Sonnenrad kann dabei einstückig mit dem Mitnehmer ausgeführt sein oder aber über eine geeignete Verbindung an diesem festgelegt sein.

Diese Maßnahme wird dadurch weitergebildet, dass die Bewegungsumkehreinrichtung ein Hohlrad aufweist, das drehfest mit der Werkzeugspindel gekoppelt ist.

Somit kann das Hohlrad etwa vergleichbar einem Kupplungskorb oder einer Kupplungstrommel ausgebildet sein, wobei sich abtriebsseitig die Werkzeugspindel anschließt.

Mit einem Planetengetriebe, dessen Sonnenrad drehfest mit dem Mitnehmer gekoppelt ist und dessen Hohlrad drehfest an der Werkzeugspindel angeordnet ist, kann grundsätzlich eine Übersetzung ins Langsame bewirkt werden.

Ein bestimmter Verschwenkwinkel, der durch den Exzenterkoppeltrieb beim Sonnenrad bewirkt wird, wird in eine Abtriebsbewegung der Werkzeugspindel überführt, die einen kleineren Verschwenkwinkel aufweist.

In vorteilhafter Weiterbildung der Erfindung weist die Bewegungsumkehreinrichtung einen Planetenträger auf, der drehfest mit dem Gehäuse koppelbar ist.

Somit kann der Planetenträger als Teil des Gehäuses ausgeführt oder aber an diesem festgelegt sein. Der Aufbau des Handwerkzeugs kann sich weiter vereinfachen.

Gemäß einer weiteren Ausgestaltung der Erfindung weist die Bewegungsumkehreinrichtung eine Mehrzahl von Planetenrädern, insbesondere drei Planetenräder, auf.

Die Gestaltung des Planetengetriebes mit drei Planetenrädern kann die für das Sonnenrad oder das Hohlrad erforderliche Lagerung vereinfachen. Eine Mehrzahl von Planetenrädern ermöglicht eine Kraftverzweigung, so dass während der Kraftübertragung etwa eine Mehrzahl von Linienberührungen auftreten kann, wobei jede einzelne Linienberührung nur einen Teil der Gesamtkraft zu übertragen hat. Je nach gewünschter Übersetzung und unter Berücksichtigung weiterer konstruktiver Randbedingungen können auch zwei, vier oder eine andere Anzahl von Planetenrädern zur Verwendung kommen.

Gemäß einem weiteren Aspekt der Erfindung ist die Bewegungsumkehreinrichtung in einer ersten Stellung zum Überführen der Antriebsbewegung in eine Abtriebsbewegung mit entgegengesetztem Drehsinn und in einer zweiten Stellung zum Überführen der Antriebsbewegung in eine Abtriebsbewegung mit gleichem Drehsinn ausgebildet.

Insbesondere Planetengetriebe können ohne großen baulichen Aufwand oder Schaltaufwand sowohl zur positiven als auch zur negativen Übersetzung von Bewegungen genutzt werden.

Grundsätzlich können etwa bei einem einfachen einstufigen Planetenradsatz durch Variation des Antriebsgliedes, des Abtriebsgliedes sowie des festgehaltenen Gliedes insgesamt sechs verschiedene Betriebsmodi bewirkt werden, die zum Teil eine positive Übersetzung und zum Teil eine negative Übersetzung aufweisen.

Wird etwa das Hohlrad festgehalten, so kann der Antrieb über den Planetenträger oder das Sonnenrad eingeleitet werden, der Abtrieb erfolgt dabei entsprechend entweder über das Sonnenrad oder den Planetenträger. Beide Betriebsmodi weisen eine positive Übersetzung auf.

Bei einem festgelegten Sonnenrad kann der Antrieb entweder über das Hohlrad oder den Planetenträger erfolgen. Dementsprechend können der Planetenträger oder das Hohlrad als Abtriebsglied genutzt werden. Auch diese beiden Betriebsmodi weisen grundsätzlich eine positive Übersetzung auf.

Ist hingegen der Planetenträger festgehalten, so können negative Übersetzungen, also eine Abtriebsbewegung mit einem zur Antriebsbewegung entgegengesetzten Drehsinn, erzielt werden. Dabei kann der Antrieb entweder über das Sonnenrad oder das Hohlrad und dementsprechend der Abtrieb über das Hohlrad oder das Sonnenrad erfolgen.

Mit geeigneten Schaltelementen können einzelne oder mehrere dieser Betriebsmodi selektiv bei nur einer Konfiguration angesteuert werden. Bei den Schaltelementen kann es sich beispielsweise um Schaltschieber oder Bremsbänder handeln, folglich um Elemente, die dazu ausgebildet sind, Komponenten der Planetenstufe wahlweise festzulegen oder freizugeben.

Gemäß einer Weiterbildung der Erfindung ist ein Schaltglied vorgesehen, das dazu ausgebildet ist, den Planetenträger zwischen einer ersten Position, in der der Planetenträger drehfest mit dem Gehäuse gekoppelt ist, und einer zweiten Position, in der der Planetenträger gegenüber dem Gehäuse verdrehbar oder verschwenkbar ist, zu verlagern.

Auf diese Weise kann die Zuordnung des Planetenträgers gegenüber dem Gehäuse bewusst genutzt werden, um verschiedene Betriebsmodi der Bewegungsumkehreinrichtung anzusteuern. Wird der Planetenträger in die zweite Position überführt, so kann sich beim Planetengetriebe eine Unterbestimmtheit ergeben, die etwa als Leerlauffunktion genutzt werden kann. Dabei würde eine Antriebsbewegung am Eingang des Planetengetriebes gewissermaßen "verpuffen" und folglich nicht zu einer Abtriebsbewegung führen.

Diese Maßnahme wird dadurch weitergebildet, dass der Planetenträger in der zweiten Position ferner dazu ausgebildet ist, die Bewegungsumkehreinrichtung zu blockieren, um eine direkte Überführung der Antriebsbewegung in die Abtriebsbewegung zu bewirken.

Auf diese Weise kann das Planetengetriebe überbrückt werden, so dass die Antriebsbewegung 1:1 in die Abtriebsbewegung überführt wird, beide also den gleichen Drehsinn aufweisen.

Damit kann ferner neben einer Änderung der Zuordnung des Drehsinns der Antriebsbewegung zum Drehsinn der Abtriebsbewegung auch ein Übersetzungssprung bewirkt werden, da ein Planetengetriebe im "Normalbetrieb" grundsätzlich eine von einer 1:1-Übersetzung abweichende Übersetzung aufweist.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Figur 1: eine perspektivische Darstellung eines erfindungsgemäßen Handwerkzeugs;
- Figur 2: einen Schnitt durch das Handwerkzeug gemäß Figur 1 im Bereich des Getriebekopfes;
- Figur 3: eine vereinfachte Darstellung eines Schnittes durch das Handwerkzeug gemäß Figur 2 entlang der Linie III-III;
- Figur 4: eine schematische Seitenansicht einer Getriebeanordnung eines erfindungsgemäßen Handwerkzeugs;
- Figur 5: eine Draufsicht der Anordnung gemäß Figur 4;
- Figur 6: eine Anordnung gemäß Figur 4 in einer zweiten Schaltstellung;
- Figur 7: eine schematische Seitenansicht einer alternativen Getriebeanordnung eines erfindungsgemäßen Handwerkzeugs;
- Figur 8: eine Draufsicht der Anordnung gemäß Figur 7; und
- Figur 9: die Anordnung gemäß Figur 7 in einer zweiten Schaltstellung.

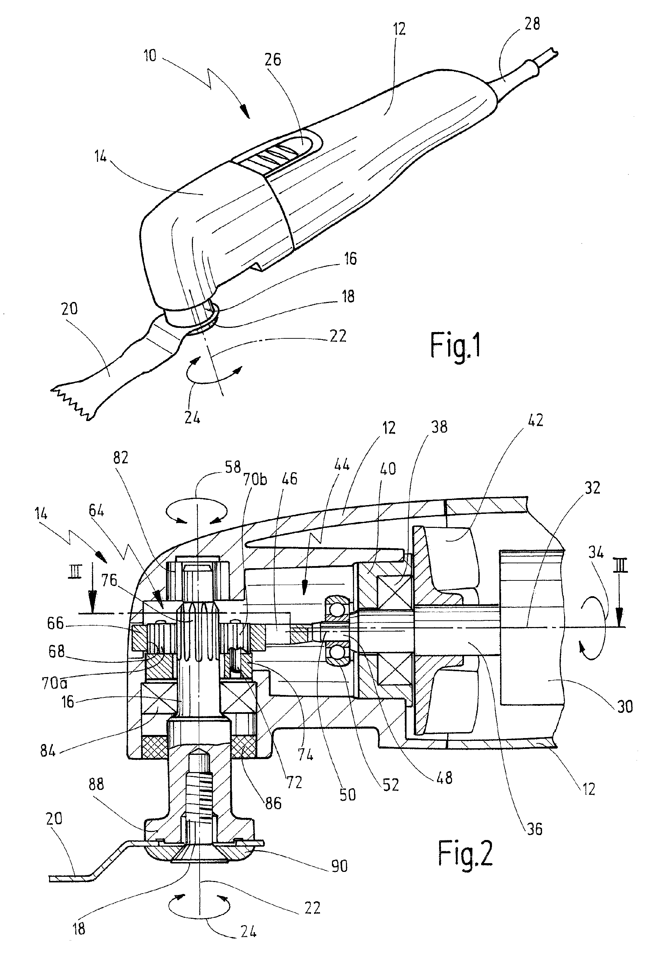

In Fig. 1 ist ein erfindungsgemäßes Handwerkzeug dargestellt und insgesamt mit 10 bezeichnet.

Das Handwerkzeug 10 weist ein Gehäuse 12 mit einem Getriebekopf 14 auf. Am Getriebekopf 14 ist eine Werkzeugspindel 16 aufgenommen, an deren Ende ein Werkzeug 20 über eine Werkzeugbefestigung 18 aufgenommen ist.

Beim Betrieb das Handwerkzeugs 10 kann die Werkzeugspindel mit hoher Frequenz, etwa 5.000 bis 30.000 Oszillationen pro Minute, um einen kleinen Winkel, etwa 0,5 Grad bis 7 Grad, um ihre Längsachse 22 zum Antrieb des Werkzeugs 20 verschwenkt werden. Diese drehoszillatorische Bewegung ist durch einen mit 24 bezeichneten Doppelpfeil angedeutet.

Vorliegend handelt es sich beim Werkzeug 20 um ein Schneidwerkzeug, das sich ausgehend von einer Werkzeugaufnahme 88 an der Werkzeugspindel 16 im Wesentlichen als Flachstück in einer Längsrichtung erstreckt, wobei an einem der Werkzeugspindel 16 abgewandten Ende eine Schneidgeometrie angeordnet ist. Das Werkzeug 20 kann ferner eine mittige Verjüngung aufweisen, wie in Fig. 1 angedeutet, sowie mit einer Kröpfung versehen sein, vergleiche Fig. 2. Je nach Anwendungsfall und Einsatzzweck sind andere Werkzeuggeometrien denkbar.

Derartige Handwerkzeuge mit drehoszillatorischem Antrieb können zum Schneiden, ebenso aber auch zum Schleifen, Sägen, für Spachtel- oder Polieranwendungen genutzt werden. Die Charakteristik des Antriebs, nämlich kleine Verschwenkwinkel bei hoher Verschwenkfrequenz, erlaubt ein präzises und kraftschonendes Arbeiten, insbesondere auch bei beengten räumlichen Verhältnissen, etwa beim bündigen Schneiden in Winkeln oder in Eckbereichen.

Ein Bediener kann das Handwerkzeug 10 an einem Griffbereich am Gehäuse 12 aufnehmen und über einen Betätigungsschalter 26 wahlweise aktivieren oder deaktivieren. Über eine Versorgungsleitung 28 kann das Handwerkzeug 10 mit Energie zum Antrieb eines Antriebsmotors versorgt werden. Es versteht sich, dass das Handwerkzeug 10 wahlweise auch leitungsunabhängig betrieben werden kann, insbesondere eine Energieversorgung mittels Akkumulatoren aufweisen kann. Daneben ist auch ein Antrieb mittels Druckluft denkbar.

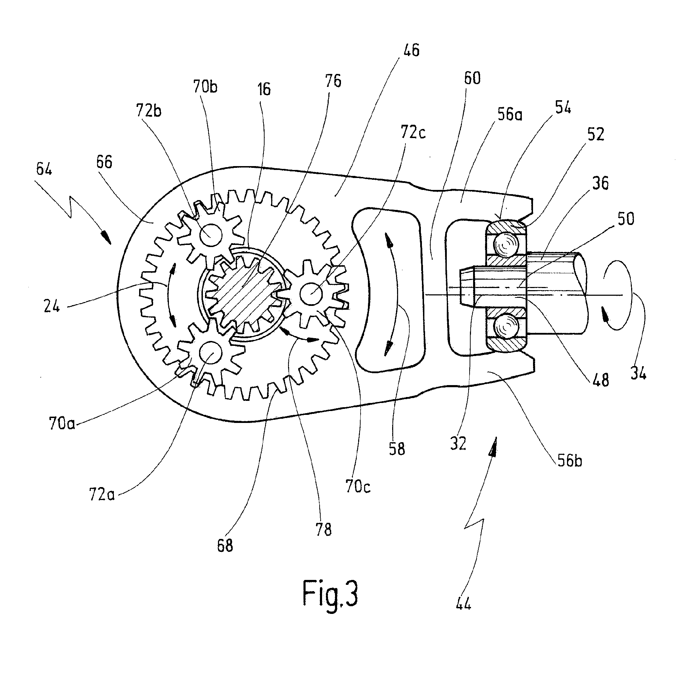

Beim Betrieb des Handwerkzeugs 10 können durch die Maßnahmen zur Erzeugung der Drehoszillationsbewegung des Werkzeugs 20 Schwingungen auftreten, die vom Bediener gegebenenfalls als nachteilig empfunden werden können. Anhand der Fig. 2 und 3 wird eine Anordnung beschrieben, die dazu beitragen kann, derartige Vibrationsexpositionen zu minimieren und folglich dem Bediener ein lang anhaltendes und ergonomisches Arbeiten ermöglichen kann.

In Fig. 2 ist das Gehäuse 12 des Handwerkzeugs 10 im Bereich des Getriebekopfes 14 geschnitten dargestellt. Zum Antrieb des Handwerkzeugs 10 dient ein Motor 30, der etwa als Elektromotor ausgestaltet sein kann. Der Motor 30 ist dazu ausgebildet, eine Motorwolle 36 um eine Mittenachse 32 rotatorisch anzutreiben, wie durch einen mit 34 bezeichneten Pfeil angedeutet. Die Motorwelle 36 ist über ein Motorlager 38 gelagert, das über ein Lagerschild 40 am Getriebekopf 14 des Gehäuses 12 festgelegt ist. An der Motorwelle 36 ist ferner ein Lüfterrad 42 aufgenommen, das dazu dienen kann, den Motor 30 sowie weitere, im Getriebekopf 14 angeordnete Komponenten des Handwerkzeugs 10 im Betrieb mit Kühlluft zu versorgen.

Die Motorwelle 36 ist zur Erzeugung der drehoszillatorischen Abtriebsbewegung der Werkzeugspindel 16 mit einem Exzenterkoppeltrieb 44 gekoppelt. Diese Kopplung kann direkt erfolgen, vergleiche Fig. 2 und Fig. 3, oder aber indirekt über zwischengeschaltete Wellen oder dergleichen bewirkt sein. Eine Zwischenwelle kann insbesondere etwa dann von Vorteil sein, wenn eine Zuordnung zwischen dem Motor 30 mit der Motorwelle 36 und der Werkzeugspindel 16 gewünscht ist, die sich von der in Fig. 2 gezeigten orthogonalen Zuordnung mit sich schneidenden Achsen 22, 32 unterscheidet.

Die Motorwelle 36 ist über einen Exzenterabschnitt 48 mit einem Mitnehmer 46 gekoppelt. Der Exzenterabschnitt 48 weist eine Exzenterachse 50 auf, die gegenüber der Mittenachse 32 der Motorwelle 36 versetzt ist, vergleiche auch Fig. 3. Somit wird der Mitnehmer 46 beim Umlauf des Exzenterabschnitts 48, der durch eine Drehung der Motorwelle 36 bewirkt wird, in eine Schwenkbewegung versetzt.

Die Kopplung zwischen dem Exzenterabschnitt 48 und dem Mitnehmer 46 erfolgt über ein Exzenterlager 52, das vorliegend eine ballige Außenfläche aufweist, die mit einer gewölbten Fläche 54 des Mitnehmers 46 zusammenwirkt.

Der Mitnehmer 46 ist gabelförmig ausgebildet und um die Längsachse 22 verschwenkbar angeordnet, vgl. Fig. 3. Auf seiner dem Exzenterabschnitt 48 der Motorwelle 36 zugewandten Seite weist der Mitnehmer 46 zwei Gabelarme 56a, 56b auf, die über einen Steg 60 verbunden sind. An den Innenseiten der Gabelarme 56a, 56b ist die gewölbte Fläche 54 angeordnet, auf die der Exzenterabschnitt 48 über das Exzenterlager 52 einwirkt.

Die durch den Umlauf des Exzenterabschnitts 48 bewirkte Schwenkbewegung des Mitnehmers 46 ist in den Fig. 2 und 3 durch einen mit 58 bezeichneten Doppelpfeil angedeutet.

Der Umlauf des Exzenterabschnitts 48 sowie die Hin- und Herbewegung des Mitnehmers 46 bewirken in der in Fig. 3 gezeigten Ebene seitliche Impulse, die sich in einer für den Bediener spürbaren Vibrationsbelastung niederschlagen können. Erfindungsgemäß ist nun vorgesehen, den Exzenterkoppeltrieb 44 mit einer Bewegungsumkehreinrichtung 64 zu koppeln, so dass sich bei der Werkzeugspindel 16 eine der Bewegung des Mitnehmers 46 entgegengerichtete Bewegung ergibt. Diese kann dazu beitragen, diese Schwingungen zu kompensieren, so dass sich das für den Bediener ergebende Vibrationsniveau spürbar verringern kann.

Zu diesem Zweck ist die Bewegungsumkehreinrichtung 64 als Planetengetriebe ausgebildet. Dabei ist in der in den Fig. 2 und 3 gezeigten Konfiguration ein Hohlrad 66 vorgesehen, das gemeinsam mit dem Mitnehmer 46 einstückig ausgebildet ist. Somit dient das Hohlrad 66 als Getriebeeingang und überträgt die durch den Exzenterkoppeltrieb 44 bewirkte Schwenkbewegung, vergleiche den Pfeil 58, mittels einer nach innen gerichteten Verzahnung 68 auf eine Mehrzahl von Planetenrädern 70a, 70b, 70c.

Die Planetenräder 70a, 70b, 70c sind auf Planetenachsen 72a, 72b, 72c gelagert, welche an einem Planetenträger 74 aufgenommen sind. Der Planetenträger 74 ist gegenüber dem Gehäuse 12 des Handwerkzeugs 10 festgelegt. Somit können die Planetenräder 70a, 70b, 70c grundsätzlich um die Planetenachsen 72a, 72b, 72c hin und her gedreht werden, jedoch nicht gemeinsam mit dem Planetenträger 74 gegenüber dem Gehäuse 12 verlagert werden. Beispielhaft ist die Schwenkbewegung des Planetenrades 70c in Fig. 3 durch einen mit 78 bezeichneten Pfeil angedeutet.

Schließlich ergibt sich eine Übertragung der Antriebskraft bzw. des Antriebsmoments auf ein Sonnerad 76, das in Fig. 2 an der Werkzeugspindel 16 ausgebildet ist. Die Bewegung des Sonnenrades 76 führt zu einer Schwenkbewegung der Werkzeugspindel 16, wie durch den Pfeil 24 in Fig. 2 angedeutet.

Die Verzahnung des Sonnenrades 76 ist bei der Werkzeugspindel 16 zwischen einem ersten Lager 82 und einem zweiten Lager 84 angeordnet. Beim Austritt der Werkzeugspindel 16 aus dem Getriebekopf 14 des Gehäuses 12 des Handwerkzeugs 10 ist ferner eine Dichtung 86, etwa ein Wellendichtring, vorgesehen.

Am werkzeugseitigen Ende weist die Werkzeugspindel 16 eine Werkzeugaufnahme 88 auf, an der das Werkzeug 20 anliegt und mittels eines Befestigungsrings 90 über die Werkzeugbefestigung 18 festgelegt ist. Dabei kann das Werkzeug 20 formschlüssig, etwa über eine Vielzahnaufnahme, kraftschlüssig oder aber kombiniert form- und kraftschlüssig an der Werkzeugaufnahme 88 befestigt sein. Vorliegend ist die Werkzeugbefestigung 18 in Form einer Befestigungsschraube mit einem konischen Schraubenkopf dargestellt.

Die in Fig. 3 gezeigte Ausgestaltung der Bewegungsumkehreinrichtung 64 weist folgende die Übersetzung kennzeichnende Zähnezahlen auf: das Hohlrad 66 ist mit 35 nach innen gerichteten Zähnen versehen (z_{H} = -35). Jedes der Planetenräder 70a, 70b, 70c weist 9 Zähne auf (Z_{P} = 9). Das Sonnenrad 76 ist mit insgesamt 13 Zähnen versehen (zs = 13). Mit diesen lediglich beispielhaft angeführten Verzahnungsverhältnissen ergibt sich eine Übersetzung zwischen dem Antrieb, dem Hohlrad 66, und dem Abtrieb, dem Sonnenrad 76, von ungefähr i = -0,37.

Mit anderen Worten wird also beispielsweise ein in den Mitnehmer 46 eingeleiteter Verschwenkwinkel (vergleiche Pfeil 58) von ungefähr 2 Grad in einen Verschwenkwinkel der Werkzeugspindel 16 bzw. des an dieser festgelegten Werkzeugs 20 (vergleiche Pfeil 24) von ungefähr 5,4 Grad überführt, wobei die Verschwenkbewegungen einander entgegengerichtet sind.

Somit kann einerseits durch die Gegenläufigkeit ein vibrationsminimierender Massen- bzw. Trägheitsmomentenausgleich erfolgen, ebenso durch die Übersetzung sich auch eine Anpassung des resultierenden Verschwenkwinkels des Werkzeugs 20 an bestimmte Einsatzbedingungen ergeben.

Die oben genannten Werte sind lediglich beispielhafter Natur, es versteht sich, dass abhängig von einem gewünschten Verschwenkwinkel und konstruktiven Randbedingungen, wie etwa Bauraumbedarf, vorhandener Bauraum im Gehäuse, Abmessungen des Mitnehmers 46 und gegebene Exzentrizität des Exzenterabschnitts 48, andere Übersetzungen oder Verzahnungsverhältnisse genutzt werden können. Ferner haben die zu erwartende Antriebs- oder Abtriebsleistung, Fertigungsparameter, wie zum Beispiel erreichbare Verzahnungsgüten, die Tragfähigkeit der verwendeten Werkstoffe sowie eine gewünschte Laufgüte einen Einfluss auf die Gestaltung der Verzahnung.

In Fig. 3 sind die Verzahnungen des Sonnenrades 76, der Planetenräder 70 sowie des Hohlrades 66 jeweils vollständig über den Kreisumfang der Räder ausgeführt. Zieht man in Betracht, dass die genutzte Planetenstufe vorrangig in einem Schwenkbetrieb und nicht in einem Drehbetrieb genutzt wird, kann es sich anbieten, die Verzahnungen entgegen der Darstellung in Fig. 3 nur partiell in den Bereichen auszuführen, in denen die Räder tatsächlich in Kontakt stehen.

Alternativ kann eine vollständige Ausführung der Verzahnungen Vorteile bei der Herstellung und Montage bringen. Es kann dabei zum einen auf hochverfügbare Standardteile und etablierte Fertigungsprozesse zur Fertigung vollständig verzahnter Räder zurückgegriffen werden. Daneben kann sich die Montage vollverzahnter Räder vereinfachen, da dabei im Regelfall keine besondere Zuordnung zueinander erforderlich ist.

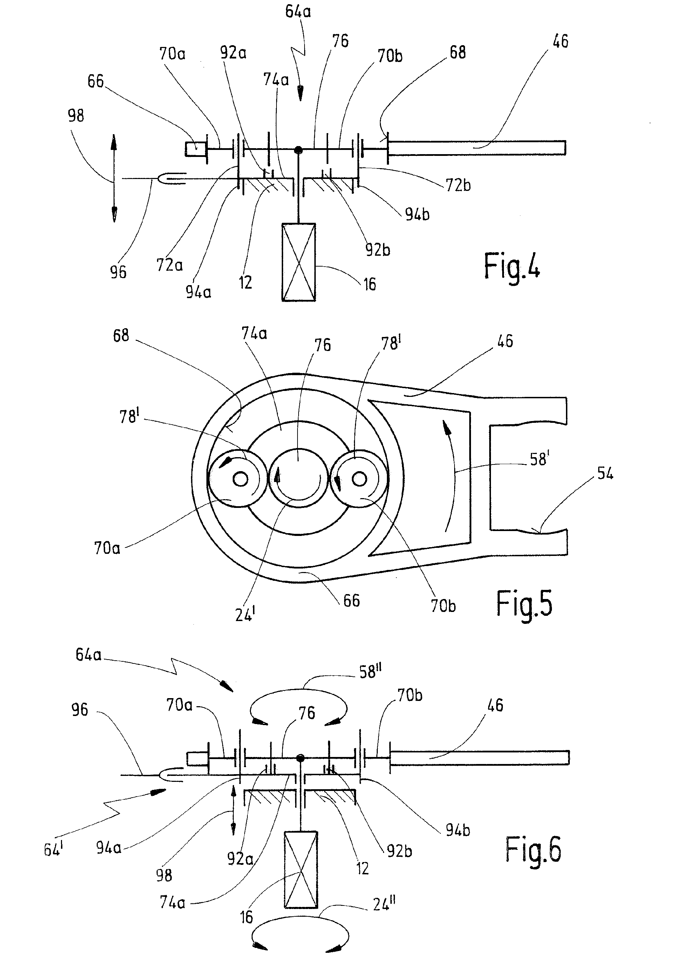

In den Fig. 4 bis 6 sowie 7 bis 9 sind schematisch alternative Getriebeanordnungen zur Verwendung beim Handwerkzeug 10 dargestellt, die eine erweiterte Funktionalität aufweisen können.

In den Fig. 4 und 5 ist in schematischer Darstellung eine Bewegungsumkehreinrichtung 64a gezeigt, deren Aufbau grundsätzlich dem der Bewegungsumkehreinrichtung 64 aus den Fig. 2 und 3 entspricht.

Es ist dabei ein gabelförmiger Mitnehmer 46 angedeutet, der etwa über einen Exzenterabschnitt 48 (nicht dargestellt) angetrieben werden kann. Der Mitnehmer 46 weist gleichzeitig das Hohlrad 66 auf.

Anhand der Fig. 5 wird beispielhaft die mit dem Betrieb der Bewegungsumkehreinrichtung 64a einhergehende Umkehr des Drehsinns zwischen Antrieb und Abtrieb erläutert.

Zu Veranschaulichungszwecken ist dabei mit dem Pfeil 58' nur ein Halbintervall eines Schwenkintervalls als Antriebsbewegung dargestellt. In Fig. 5 wird der Mitnehmer 46 und damit die Verzahnung 68 des Hohlrades 66 im Gegenuhrzeigersinn verschwenkt. Das Hohlrad 66 wirkt dabei auf die Planetenräder 70a, 70b, die von diesem gleichsinnig mitgenommen werden. Die sich ergebende Verschwenkung der Planetenräder 70a, 70b entgegen dem Uhrzeigersinn ist durch die Pfeile 78' angedeutet. Die Planetenräder 70a, 70b kämmen mit dem Sonnenrad 76, welches ebenso außenverzahnt ist. Infolgedessen wird das Sonnenrad 76 im Uhrzeigersinn verschwenkt bzw. verdreht. Es hat damit eine Bewegungsumkehr stattgefunden.

Ist es etwa angestrebt, möglichst nur eine geringe "Übersetzung" zwischen der Antriebsoszillation und der Abtriebsoszillation zu bewirken, so kann im Rahmen der technologischen Grenzen die Zähnezahl des Sonnenrades 76 soweit möglich mit der Zähnezahl des Hohlrades 66 in Übereinstimmung gebracht werden. Ist dagegen ein große "Übersetzung" erwünscht, so kann die Zähnezahl des Sonnenrades 76 deutlich kleiner als die Zähnezahl des Hohlrades 66 gehalten sein.

In Fig. 4 sind ferner mit 92a, 92b sowie 94a, 94b Rastelemente angedeutet, die dafür ausgebildet sind, selektiv den Planetenträger 74a am Gehäuse 12 festzulegen oder aber von diesem zu lösen und die Bewegungsumkehreinrichtung 64a zu blockieren. Zu diesem Zweck ist ferner ein Schaltglied 96 vorgesehen, das dazu vorgesehen ist, bedarfsweise die Verlagerung des Planetenträgers 74a bewirken zu können, wie durch einen mit 98 bezeichneten Doppelpfeil angedeutet. Das Schaltglied 96 kann etwa als Schaltgabel ausgeführt sein, die von außen durch das Gehäuse 12 von einem Bediener betätigt werden kann.

Hierbei zeigt Fig. 4 den Planetenträger 74a in einer ersten Position, in der die Bewegungsumkehreinrichtung 64a aktiv ist und eine gegensinnige Übersetzung zwischen der Antriebsoszillation und der Abtriebsoszillation bewirkt wird.

Demgegenüber ist der Planetenträger 74a in Fig. 6 in einer zweiten Position gezeigt, in der die Rastelemente 94a, 94b vom Gehäuse 12 gelöst sind und somit eine Verdrehung des Planetenträgers 74a gegenüber dem Gehäuse 12 des Handwerkzeugs 10 ermöglicht ist. Gleichzeitig sind die Rastelemente 92a, 92b in die Verzahnung der Planetenstufe eingerückt, um diese in sich zu blockieren. Somit ist die Bewegungsumkehreinrichtung 64a in Fig. 6 gewissermaßen "überbrückt", so dass eine oszillierende Antriebsbewegung 1:1 in eine oszillierende Abtriebsbewegung überführt wird. Dies wird symbolhaft durch die Pfeile 58" und 24" angedeutet. Mit anderen Worten wird ein bestimmter Verschwenkwinkel, der am Mitnehmer 46 anliegt, in der zweiten Position in einen gleichgerichteten, ebenso großen Verschwenkwinkel der Werkzeugspindel 16 bzw. des Werkzeugs 20 überführt.

Somit kann bei geringem Aufwand eine Zweigang-Funktionalität bereitgestellt werden.

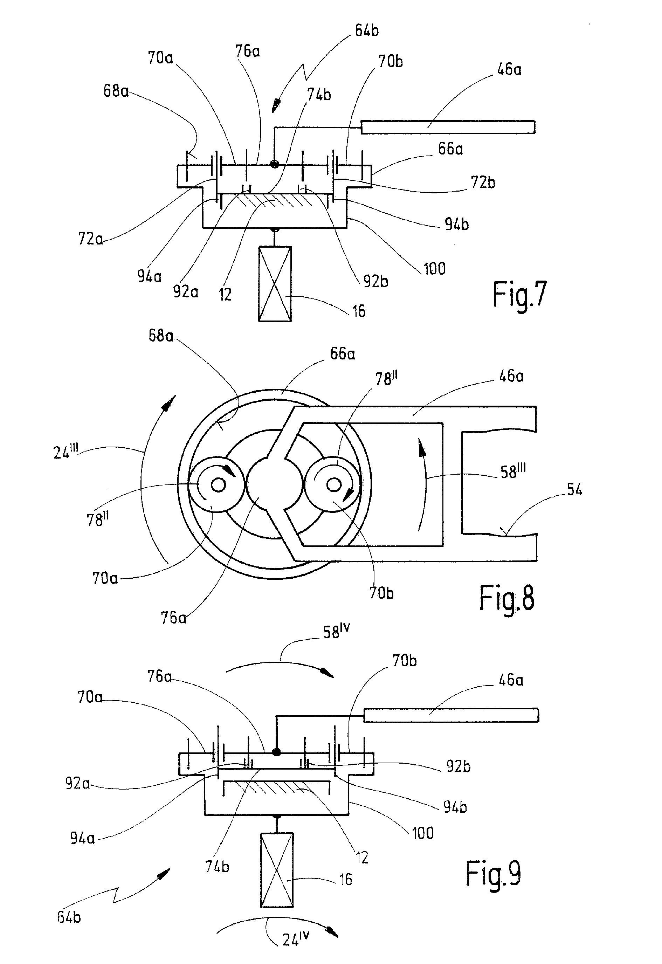

Auch die in Fig. 7 gezeigte Getriebeanordnung mit einer Bewegungsumkehreinrichtung 64b kann mit einer derartigen Funktionalität erweitert werden, wie in Fig. 9 angedeutet ist. Dabei wurde aus Gründen der Übersichtlichkeit auf die Darstellung des Schaltgliedes 96 zum Verlagern des Planetenträgers 74b verzichtet. Auch in Fig. 9 ist die Bewegungsumkehreinrichtung 64b blockiert, so dass eine direkte 1:1-Übersetzung zwischen der Antriebsbewegung am Mitnehmer 46 und der Abtriebsbewegung an der Werkzeugspindel 16 vollzogen wird, vergleiche die gleichgerichteten Richtungspfeile 58^{IV} und 24^{IV}.

Daneben veranschaulichen Fig. 7 und Fig. 8 eine Ausgestaltung, bei der im Bewegungsumkehrmodus eine Übersetzung der Antriebsoszillation am Mitnehmer 46 in eine Abtriebsoszillation an der Werkzeugspindel 16 bzw. dem daran festgelegten Werkzeug 20 mit kleinerem Verschwenkwinkel erfolgt.

Auch hier ist die Bewegungsumkehreinrichtung 64b als Planetenradstufe ausgebildet, wobei nunmehr der Antrieb über den Mitnehmer 46a am Sonnenrad 76a erfolgt. Das Sonnenrad 76a wirkt auf die Planetenräder 70a, 70b, die auf Planetenachsen 72a, 72b gelagert sind, die am Planetenträger 74b festgelegt sind. In Fig. 7 ist der Planetenträger 74b drehfest mit dem Gehäuse 12 gekoppelt.

In Fig. 8 ist wiederum ein Halbintervall eines Schwenkintervalls angedeutet. Die Antriebsbewegung wird dabei durch den Pfeil 58"' verkörpert. Somit werden der Mitnehmer 46a und das Sonnenrad 76a im Gegenuhrzeigersinn verdreht. Dies bewirkt unmittelbar ein Verdrehen der Planetenräder 70a, 70b im Uhrzeigersinn, vgl. die Pfeile 78". Das Hohlrad 66a ist über die Verzahnung 68a mit den Planetenrädern 70a, 70b gekoppelt und abtriebsseitig mit der Werkzeugspindel 16 verknüpft. Der Antrieb durch die Planetenräder 70a, 70b bewirkt ein Verschwenken des Hohlrades 66a und damit der Werkzeugspindel 16 im Uhrzeigersinn, vergleiche den Pfeil 24"'.

Legt man auch bei dieser Ausgestaltung die bei den Fig. 2 und 3 beispielhaft veranschlagten Zähnezahlen Z_{H} = -35, Z_{S} = 13 sowie Z_{P} = 9 zugrunde, so ergibt sich eine Übersetzung zwischen Antrieb und Abtrieb von ungefähr i = -2,7. Mit anderen Worten wird etwa ein Verschwenkwinkel am Mitnehmer 46a von 10 Grad in einen Verschwenkwinkel der Werkzeugspindel 16 und des an dieser festgelegten Werkzeugs 20 von 3,7 Grad überführt, wobei die Schwenkbewegungen entgegengerichtet sind. Auch dabei kann eine wirksame Reduktion der vom Bediener spürbaren Vibrationen bewirkt werden.

Im Rahmen der Erfindung wird ein Handwerkzeug zum drehoszillatorischen Antrieb eines Werkzeugs angegeben, das bei geringem baulichen Zusatzaufwand ohne Beeinträchtigung der Leistungsfähigkeit ein ergonomisches und ermüdungsfreies Arbeiten ermöglichen kann und sich insbesondere für Anwendungen eignet, die einen längeren Einsatz erfordern.

## Patentansprüche

1. Handwerkzeug mit einem Gehäuse (12) mit einem Getriebekopf (14), mit einer durch einen Motor (30) rotatorisch antreibbaren Motorwelle (36), die über einen Exzenterkoppeltrieb (44) mit einer Werkzeugspindel (16) zu deren Antrieb koppelbar ist, wobei die Werkzeugspindel (16) um ihre Längsachse (22) drehoszillatorisch antreibbar und zur Aufnahme eines Werkzeugs (20) ausgebildet ist, **dadurch gekennzeichnet, dass** eine Bewegungsumkehreinrichtung (64, 64a, 64b) vorgesehen ist, die dazu ausgebildet ist, eine vom Exzenterkoppeltrieb (44) erzeugte oszillierende Antriebsbewegung in eine oszillierende Abtriebsbewegung zu überführen, die einen zu dieser entgegengerichteten Drehsinn aufweist.

2. Handwerkzeug (10) nach Anspruch 1, **dadurch gekennzeichnet, dass** die Bewegungsumkehreinrichtung (64, 64a, 64b) ferner dazu ausgebildet ist, die Antriebsbewegung zu übersetzen.

3. Handwerkzeug (10) nach Anspruch 1 oder 2, **dadurch gekennzeichnet, dass** der Exzenterkoppeltrieb (44) einen Mitnehmer (46) aufweist, der oszillierend angetrieben ist und mit der Bewegungsumkehreinrichtung (64, 64a, 64b) zu deren Antrieb koppelbar ist.

4. Handwerkzeug (10) nach einem der vorhergehenden Ansprüche, **dadurch gekennzeichnet, dass** der Mitnehmer (46) als schwenkbare Mitnehmergabel ausgebildet ist und der Exzenterkoppeltrieb (44) einen umlaufenden Exzenterabschnitt (48) aufweist, der mit einer gewölbten Fläche (54) der Mitnehmergabel zusammenwirkt.

5. Handwerkzeug (10) nach einem der vorhergehenden Ansprüche, **dadurch gekennzeichnet, dass** die Bewegungsumkehreinrichtung (64, 64a, 64b) als Planetengetriebe ausgebildet ist und vorzugsweise koaxial zur Längsachse (22) angeordnet ist.

6. Handwerkzeug (10) nach einem der vorhergehenden Ansprüche, **dadurch gekennzeichnet, dass** die Bewegungsumkehreinrichtung (64, 64a) ein Hohlrad (66) aufweist, das drehfest mit dem Mitnehmer (46) gekoppelt ist.

7. Handwerkzeug (10) nach einem der vorhergehenden Ansprüche, **dadurch gekennzeichnet, dass** die Bewegungsumkehreinrichtung (64, 64a) ein Sonnenrad (76) aufweist, dass drehfest mit der Werkzeugspindel (16) gekoppelt ist, insbesondere mit dieser einstückig ausgeführt ist.

8. Handwerkzeug (10) nach einem der Ansprüche 1 bis 5, **dadurch gekennzeichnet, dass** die Bewegungsumkehreinrichtung (64b) ein Sonnenrad (76a) aufweist, dass drehfest mit dem Mitnehmer (46) gekoppelt ist.

9. Handwerkzeug (10) nach einem der Ansprüche 1 bis 5 oder 8, **dadurch gekennzeichnet, dass** die Bewegungsumkehreinrichtung (64b) ein Hohlrad (66a) aufweist, dass drehfest mit der Werkzeugspindel (16) gekoppelt ist.

10. Handwerkzeug (10) nach einem der vorhergehenden Ansprüche, **dadurch gekennzeichnet, dass** die Bewegungsumkehreinrichtung (64a, 64b) einen Planetenträger (74a, 74b) aufweist, der drehfest mit dem Gehäuse (12) koppelbar ist.

11. Handwerkzeug (10) nach einem der vorhergehenden Ansprüche, **dadurch gekennzeichnet, dass** die Bewegungsumkehreinrichtung (64, 64a, 64b) eine Mehrzahl von Planetenrädern (70), insbesondere drei Planetenräder (70a, 70b, 70c), aufweist.

12. Handwerkzeug (10) nach einem der vorhergehenden Ansprüche, **dadurch gekennzeichnet, dass** die Bewegungsumkehreinrichtung (64a, 64b) in einer ersten Stellung zum Überführen der Antriebsbewegung in eine Abtriebsbewegung mit entgegengesetztem Drehsinn und in einer zweiten Stellung zum Überführen der Antriebsbewegung in eine Abtriebsbewegung mit gleichem Drehsinn ausgebildet ist.

13. Handwerkzeug (10) nach einem der vorhergehenden Ansprüche, **dadurch gekennzeichnet, dass** ein Schaltglied (96) vorgesehen ist, dass dazu ausgebildet ist, den Planetenträger (74a, 74b) zwischen einer ersten Position, in der der Planetenträger (74a, 74b) drehfest mit dem Gehäuse (12) gekoppelt ist, und einer zweiten Position, in der der Planetenträger (74a, 74b) gegenüber dem Gehäuse (12) verdrehbar oder verschwenkbar ist, zu verlagern.

14. Handwerkzeug (10) nach Anspruch 13, **dadurch gekennzeichnet, dass** der Planetenträger (72) in der zweiten Position ferner dazu ausgebildet ist, die Bewegungsumkehreinrichtung (64a, 64b) zu blockieren, um eine direkte Überführung der Antriebsbewegung in die Abtriebsbewegung zu bewirken.
